# EUROPEAN PATENT APPLICATION

(11) **EP 4 817 947 A1**
(43) Date of publication of application: **07.10.2026**
(21) Application number: 25210610.9
(22) Date of filing: 23.10.2025
(51) Int. Cl.: B60L 58/12, B60L 58/19, B60L 58/22

(54) **VEHICULAR BATTERY SYSTEM AND METHOD OF CONTROLLING BALANCING THEREOF**

(30) Priority: 31.03.2025 KR 20250041120
(71) Applicant: Hyundai Motor Company, Seoul 06797 (KR); Kia Corporation, Seoul 06797 (KR)
(72) Inventor: HONG, Sung Min, 18280 Hwaseong-si, Gyeonggi-do (KR); LEE, Yong Gyu, 18280 Hwaseong-si, Gyeonggi-do (KR)
(74) Representative: Hoffmann Eitle

(57) **Abstract**

A vehicular battery system includes a plurality of single-phase battery systems, wherein each of the plurality of single-phase battery systems includes a plurality of battery modules, wherein the plurality of battery modules include a combination of a first battery module and a second battery module, wherein each of the first battery module and the second battery module includes a battery, an inverter including AC module output terminals outputting an AC module voltage from a voltage of the battery, and a DC/DC converter including DC module output terminals outputting a DC module voltage from a voltage of the battery, wherein the DC/DC converter disposed in the first battery module includes a step-down converter, and wherein the DC/DC converter disposed in the second battery module includes a step-up converter.

## Description

### CROSS-REFERENCE TO RELATED APPLICATION(S)

The present application claims benefit of priority to Korean Patent Application No. 10-2025-0041120 filed on March 31, 2025, the present disclosure of which is incorporated herein by reference in its entirety.

### FIELD OF THE PRESENT DISCLOSURE

The present disclosure relates to a vehicular battery system and a balancing control method for the vehicular battery system.

It is to be noted that the contents described in this section simply provide background information for the present disclosure and do not constitute the related art.

Recently, as interest in issues such as energy efficiency, environmental pollution, fossil fuel depletion, or the like increases, the development of eco-friendly vehicles that may practically replace internal combustion engine vehicles are actively underway.

As such eco-friendly vehicles, examples include battery electric vehicles (BEV) using batteries as a power source, fuel cell electric vehicles (FCEV) using fuel cells as the main power source, hybrid electric vehicles (HEV) using engines and motors together as a driving device to drive vehicles, or the like.

The above-mentioned eco-friendly vehicles may be called electric vehicles (xEV) in a broad sense, and may have in common that they may be motor-driven vehicles and electrified vehicles that drive by driving a motor with power from a high-voltage power source such as a battery or fuel cell.

An electric vehicle may be equipped with a high-voltage battery supplying power to a motor, and the high-voltage battery supplies power to other power/electronic components in the vehicle such as the motor or the like by repeatedly charging and discharging while the vehicle is running. In addition, since a magnitude, a type, or the like of voltage, required for each type of power/electronic component, may be different, various types of power conversion devices converting an output voltage of the high-voltage battery may be required. At this time, the power conversion device should convert a high voltage output from the high-voltage battery, so a high-voltage power conversion element is required. Since costs are high, production costs may increase.

### BRIEF SUMMARY

According to an exemplary embodiment of the present disclosure, a vehicular battery system and a balancing control method of the vehicular battery system, configured for reducing manufacturing costs, satisfying various specifications by combining standardized battery modules in series or in parallel, and reducing production costs because mass production is possible, may be provided.

Furthermore, according to an exemplary embodiment of the present disclosure, space utilization efficiency may increase to reduce an overall volume, and when a failure occurs in some portions, each battery module may be replaced so that repairs are easy, and since balancing control may be performed for each battery module, overall energy efficiency may increase.

According to an exemplary embodiment of the present disclosure, a vehicular battery system includes a plurality of single-phase battery systems, wherein each of the plurality of single-phase battery systems includes a plurality of battery modules, wherein the plurality of battery modules include a combination of a first battery module and a second battery module, wherein each of the first battery module and the second battery module includes a battery, an inverter including AC module output terminals outputting an AC module voltage from a voltage of the battery, and a DC/DC converter including DC module output terminals outputting a DC module voltage from a voltage of the battery, wherein the DC/DC converter disposed in the first battery module includes a step-down converter including first DC module output terminals stepping down a voltage of the battery to a first DC module voltage and outputting the first DC module voltage, and wherein the DC/DC converter disposed in the second battery module includes a step-up converter including second DC module output terminals stepping up a voltage of the battery to a second DC module voltage and outputting the second DC module voltage.

According to an exemplary embodiment of the present disclosure, the second DC module output terminals disposed respectively in the plurality of second battery modules may be connected to each other in series, and may output a second DC system voltage through a second DC system output terminals.

According to an exemplary embodiment of the present disclosure, the second DC system output terminals respectively disposed in the plurality of single-phase battery systems may be connected to each other in parallel, and may output an integer multiple of the second DC module voltage, and may be configured to be connected to a second load using an integer multiple of the second DC module voltage as a driving voltage.

According to an exemplary embodiment of the present disclosure, the AC module output terminals disposed respectively in the plurality of battery modules may be connected to each other in series, and may output an AC system voltage through AC system output terminals.

According to an exemplary embodiment of the present disclosure, the AC system output terminals respectively disposed in the plurality of single-phase battery systems may have the same phase difference, and may output an integer multiple of the AC module voltage, and may be configured to be connected to an AC load having an integer multiple of the AC module voltage as a driving voltage.

According to an exemplary embodiment of the present disclosure, when the first battery module is disposed in singular, the first DC module output terminals may be first DC system output terminals, and when the first battery module is disposed in two or more, the first DC module output terminals disposed respectively in the plurality of first battery modules may be connected to each other in parallel to output a first DC system voltage through the first DC system output terminals.

According to an exemplary embodiment of the present disclosure, the first DC system output terminals respectively disposed in the plurality of single-phase battery systems may be connected to each other in parallel to output the first DC module voltage, and may be configured to be connected to a first load using the first DC module voltage as a driving voltage.

According to an exemplary embodiment of the present disclosure, the vehicular battery system may further include a controller performing balancing control between the plurality of battery modules, for each of the plurality of single-phase battery systems.

According to an exemplary embodiment of the present disclosure, the controller may be configured to monitor in real time state-of-charges (SOC) of batteries respectively disposed in the plurality of battery modules for each of the plurality of single-phase battery systems, set a turn-on sequence of inverters respectively disposed in the plurality of battery modules, based on the state-of-charges of the batteries respectively disposed in the plurality of battery modules, monitored in real time, and sequentially turn on or off the inverters respectively disposed in the plurality of battery modules according to the set turn-on sequence, to output the AC system voltage in a sine wave form.

According to an exemplary embodiment of the present disclosure, the controller may set the turn-on sequence of the inverters respectively disposed in the plurality of battery modules so that the higher the state-of-charge of a battery disposed in each of the plurality of battery modules, the earlier the turn-on sequence.

According to an exemplary embodiment of the present disclosure, the inverters may include an H-bridge single-phase inverter, and the controller may be configured to complementarily control switches disposed in the H-bridge single-phase inverter for every T/2 cycle of the AC system voltage, sequentially turn on the inverters respectively disposed in the plurality of battery modules according to the turn-on sequence during a T/4 cycle, and sequentially turn off the inverters respectively disposed in the plurality of battery modules in a sequence, opposite to the turn-on sequence, during the next T/4 cycle.

According to an exemplary embodiment of the present disclosure, the controller may be configured to update a turn-on sequence of inverters respectively disposed in the plurality of battery modules for every integer multiple of one cycle of the AC system voltage.

According to an exemplary embodiment of the present disclosure, the inverters may include an H-bridge single-phase inverter, and the controller may be configured to turn off one of two upper switches or two lower switches of the H-bridge single-phase inverter so that a battery disposed in at least one of the plurality of battery modules is bypassed.

According to an exemplary embodiment of the present disclosure, a vehicular battery system includes a single-phase battery system, wherein the single-phase battery system includes a plurality of battery modules, wherein the plurality of battery modules include a combination of a first battery module and a second battery module, wherein each of the first battery module and the second battery module includes a battery, an inverter including AC module output terminals outputting an AC module voltage from a voltage of the battery, and a DC/DC converter including DC module output terminals outputting a DC module voltage from a voltage of the battery, wherein the DC/DC converter disposed in the first battery module includes a step-down converter including first DC module output terminals stepping down a voltage of the battery to a first DC module voltage and outputting the first DC module voltage, and wherein the DC/DC converter disposed in the second battery module includes a step-up converter including second DC module output terminals stepping up a voltage of the battery to a second DC module voltage and outputting the second DC module voltage.

According to an exemplary embodiment of the present disclosure, a balancing control method performed by a computing device including one or more processors and a memory storing programs executed by the one or more processors, wherein the balancing control method is configured to monitor in real time state-of-charges (SOC) of batteries respectively disposed in a plurality of battery modules for each of a plurality of single-phase battery systems, set a turn-on sequence of inverters respectively disposed in the plurality of battery modules, based on the state-of-charges of the batteries respectively disposed in the plurality of battery modules, monitored in real time, and sequentially turn on or off the inverters respectively disposed in the plurality of battery modules according to the set turn-on sequence, to output an AC system voltage in a sine wave form.

According to an exemplary embodiment of the present disclosure, the balancing control method may set the turn-on sequence of the inverters respectively disposed in the plurality of battery modules so that the higher the state-of-charge of a battery disposed in each of the plurality of battery modules, the earlier the turn-on sequence.

According to an exemplary embodiment of the present disclosure, the inverters may include an H-bridge single-phase inverter, and the balancing control method may complementarily control switches disposed in the H-bridge single-phase inverter for every T/2 cycle of the AC system voltage, may sequentially turn on the inverters respectively disposed in the plurality of battery modules according to the turn-on sequence during a T/4 cycle, and may sequentially turn off the inverters respectively disposed in the plurality of battery modules in a sequence, opposite to the turn-on sequence, during the next T/4 cycle.

According to an exemplary embodiment of the present disclosure, the balancing control method may be configured to update a turn-on sequence of inverters respectively disposed in the plurality of battery modules for every integer multiple of one cycle of the AC system voltage.

According to an exemplary embodiment of the present disclosure, the inverters may include an H-bridge single-phase inverter, and the balancing control method may be configured to turn off one of two upper switches or two lower switches of the H-bridge single-phase inverter when a battery disposed in at least one of the plurality of battery modules is bypassed.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1A is a view exemplarily illustrating a battery module according to an exemplary embodiment of the present disclosure.
FIG. 1B is a view exemplarily illustrating a structure of an inverter according to an exemplary embodiment of the present disclosure.
FIG. 1C is a view exemplarily illustrating a battery module according to an exemplary embodiment of the present disclosure.
FIG. 2 is a view exemplarily illustrating a single-phase battery module system including a plurality of battery modules according to an exemplary embodiment of the present disclosure.
FIG. 3 is a view exemplarily illustrating a connection relationship of a first DC/DC converter in a three-phase battery system according to an exemplary embodiment of the present disclosure.
FIG. 4 is a view exemplarily illustrating a connection relationship of a second DC/DC converter in a three-phase battery system according to an exemplary embodiment of the present disclosure.
FIG. 5 is a view exemplarily illustrating a connection relationship of an inverter in a three-phase battery system according to an exemplary embodiment of the present disclosure.
FIG. 6 is a view exemplarily illustrating a controller according to an exemplary embodiment of the present disclosure.
FIG. 7 is a view exemplarily illustrating balancing control according to an exemplary embodiment of the present disclosure.
FIG. 8A is a view exemplarily illustrating a current path of a single-phase battery system when polarity of an AC system voltage is positive according to an exemplary embodiment of the present disclosure.
FIG. 8B is a view exemplarily illustrating a current path of a single-phase battery system when polarity of an AC system voltage is negative according to an exemplary embodiment of the present disclosure.
FIG. 8C is a view exemplarily illustrating control of an inverter switch when bypassing a battery disposed in at least one of a plurality of battery modules during balancing control according to an exemplary embodiment of the present disclosure.
FIG. 9 is a flowchart illustrating a balancing control method of a vehicular battery system according to an exemplary embodiment of the present disclosure.
FIG. 10 is a block diagram of a computing device that may fully or partially implement a controller according to an exemplary embodiment of the present disclosure.

### DETAILED DESCRIPTION

Hereinafter, specific embodiments of the present disclosure will be described with reference to the accompanying drawings. The following detailed description is disposed to aid in a comprehensive understanding of a method, a device and/or a system described in the present specification. However, the detailed description is for illustrative purposes only, and the present disclosure is not limited thereto.

In describing embodiments of the present disclosure, when it is determined that a detailed description of a known technology related to the present disclosure may unnecessarily obscure the gist of the present disclosure, a detailed description thereof will be omitted. In addition, terms to be described later are terms defined in consideration of functions in the present disclosure, which may be changed depending on intention or custom of a user or operator. Therefore, the definition of these terms should be made based on the contents throughout the present specification. The terminology used herein is for the purpose of describing various exemplary embodiments only and is not to be limiting of the embodiments. As used herein, the singular forms are intended to include the plural forms as well, unless the context clearly indicates otherwise. As used herein, the terms "comprise," "include," "have," or the like, when used in the present specification, specify the presence of stated features, integers, steps, operations, elements, components or a combination thereof, but do not preclude the presence or addition of one or more other features, integers, steps, operations, elements, components, and/or groups thereof.

Furthermore, 'module voltage' described below may mean voltage output from a battery module, and 'system voltage' may mean voltage output from a battery system configured based on the battery module.

A vehicular battery system described below may include a single-phase battery system and a three-phase battery system.

Furthermore, the present disclosure may be used in various devices to which a battery module and a vehicular battery system are applicable, as well as in vehicles.

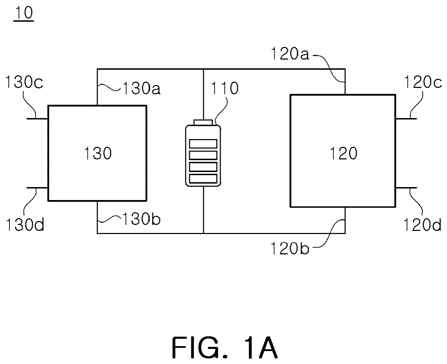

FIG. 1A is a view exemplarily illustrating a battery module according to an exemplary embodiment of the present disclosure.

Referring to FIG. 1A, a first battery module 10 according to an exemplary embodiment of the present disclosure may include a battery 110, an inverter 120, and a first DC/DC converter 130.

The battery 110 may output voltage, and may charge or discharge electrical energy. Furthermore, the battery 110 may provide voltage to the inverter 120 and the first DC/DC converter 130.

Furthermore, the battery 110 may have a battery voltage of a lower magnitude than a general high-voltage battery pack. Therefore, the first battery module 10 according to an exemplary embodiment of the present disclosure may apply a power conversion element configured for operating at a low voltage, thereby reducing manufacturing costs.

The inverter 120 may convert the voltage of the battery 110 into an AC module voltage, and may output the AC module voltage. The inverter 120 may include input terminals 120a and 120b and output terminals 120c and 120d, and the input terminals 120a and 120b of the inverter 120 may be connected to the battery 110 in parallel to receive the voltage, and the output terminals 120c and 120d of the inverter 120 may output the AC module voltage. Hereinafter, the output terminals 120c and 120d of the inverter 120 may be referred to as AC module output terminals outputting an AC module voltage. Furthermore, the inverter 120 may be configured to supply AC power according to the AC module voltage to an AC load. For example, the AC load may be a load such as a motor or the like using the AC voltage as a driving voltage.

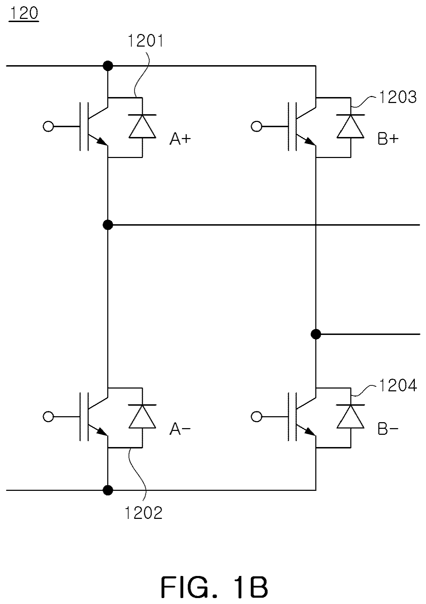

FIG. 1B is a view exemplarily illustrating a structure of an inverter according to an exemplary embodiment of the present disclosure.

As illustrated in FIG. 1B, an inverter 120 may include a plurality of Si-MOSFET (metal oxide semiconductor field effect transistor, MOSFET) elements 1201, 1202, 1203, and 1204, and may be configured as an H-bridge single-phase inverter structure.

In conventional electric vehicle systems, SiC power semiconductors may be mainly applied. Such SiC power semiconductors may have high efficiency and a fast switching speed, but may be expensive.

Furthermore, the conventional electric vehicle systems may use an insulated gate bipolar transistor (IGBT) at a low voltage, and IGBT may be relatively inexpensive, but may have a slow switching speed.

The Si-MOSFET elements have a fast switching speed, and may be relatively inexpensive, but performance thereof may deteriorate at a high voltage, making them difficult to apply to conventional high-voltage electric vehicle systems.

Since a battery module according to an exemplary embodiment of the present disclosure may be driven at a low voltage, the Si-MOSFET elements may be applied to the inverter. Therefore, the inverter included in a battery module according to an exemplary embodiment of the present disclosure may reduce production costs by use of the plurality of Si-MOSFET elements, while having a fast switching speed. Therefore, power efficiency may be improved to increase a vehicle driving range, and as the driving range increases, battery capacity may be reduced to decrease costs. Furthermore, an inverter according to an exemplary embodiment of the present disclosure may be configured as an H-bridge single-phase inverter structure to maintain stability even at a large amount of current.

Furthermore, although FIG. 1B illustrates a case in which an H-bridge circuit is configured using four Si-MOSFETs as an exemplary embodiment of the present disclosure, the H-bridge circuit may also be configured by connecting the plurality of Si-MOSFET elements in parallel to switch a large amount of current.

A first DC/DC converter 130 may be a step-down converter stepping down a voltage of a battery 110 to a first DC module voltage, lower than the voltage of the battery 110, and outputting the first DC module voltage. Furthermore, the first DC module voltage output from the first DC/DC converter 130 may be connected alone or to a first DC module voltage output from another first battery module 10 in parallel, to provide power to a low-voltage load. For example, the low-voltage load may be an electric/electronic load such as various lamps of an electric vehicle, a radio, an infotainment, or the like. Furthermore, the first DC module voltage may be set to 12 V, 24 V, or 48 V, which may be a driving voltage of the low-voltage load. A magnitude of a voltage mentioned in the present specification may be only an exemplary embodiment of the present disclosure, and may be set to various magnitudes of voltage depending on a design.

The first DC/DC converter 130 may include input terminals 130a and 130b and output terminals 130c and 130d, and the input terminals 130a and 130b of the first DC/DC converter 130 may be connected to the battery 110 in parallel to receive the voltage of the battery 110, and the output terminals 130c and 130d of the first DC/DC converter 130 may output the first DC module voltage. Furthermore, the output terminals 130c and 130d of the first DC/DC converter 130 may be referred to as first DC module output terminals outputting the first DC module voltage.

Furthermore, the output terminals 130c and 130d of the first DC/DC converter 130 may be directly connected to the low-voltage load to provide the first DC module voltage.

In an exemplary embodiment of the present disclosure, one end (130d) of the output terminals of the first DC/DC converter 130 may be grounded, and the other end (130c) may be connected to the low-voltage load to output the first DC module voltage. In another exemplary embodiment of the present disclosure, both ends of the output terminals of the first DC/DC converter 130 may be connected to both ends of the low-voltage load to output the first DC module voltage.

Furthermore, the battery 110 may be configured to be connected to input terminals 120a and 120b of the inverter and the input terminals 130a and 130b of the first DC/DC converter 130 in parallel.

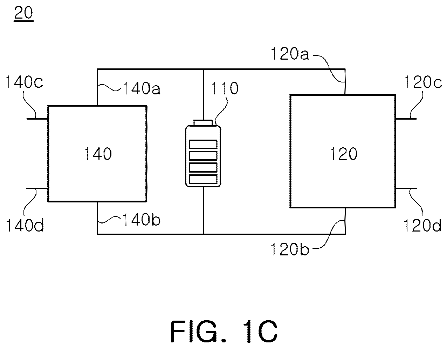

FIG. 1C is a view exemplarily illustrating a second battery module according to an exemplary embodiment of the present disclosure. A structure of a second battery module 20 may be the same as that of FIG. 1A, but may include a second DC/DC converter 140 instead of a second DC/DC converter 130.

The second DC/DC converter 140 may be a step-up converter stepping up a voltage of a battery 110 to a second DC module voltage, and outputting the second DC module voltage. The second DC module voltage may be set to have a value, greater than a first DC module voltage output from the first DC/DC converter 130.

Furthermore, the second DC module voltage output from the second DC/DC converter 140 may be connected to a second DC module voltage output from another second battery module 20 in series, to provide power to a high-voltage load. In other words, the second DC module voltage output from the second DC/DC converter 140 may not provide power to a high-voltage load as a single output, but may be connected to a second DC module voltage of another second battery module 20 in series, to provide power to the high-voltage load. Since a battery voltage included in the second battery module 20 may be configured as a low voltage, a plurality of second battery modules 20 may be combined in series to provide a high voltage to provide voltage to the high-voltage load such as an air conditioning system or the like. In other words, an output terminals of the second DC/DC converter may be connected to an output terminals of a second DC/DC converter of another battery module in series, to form a high voltage and provide power to the high-voltage load.

Furthermore, the second DC/DC converter 140 may include input terminals 140a and 140b and output terminals 140c and 140d, and the input terminals 140a and 140b of the second DC/DC converter may be connected to the battery 110 in parallel to receive a voltage of the battery 110, and the output terminals 140c and 140d of the second DC/DC converter 140 may output the second DC module voltage. Furthermore, in the present specification, the output terminals 140c and 140d of the second DC/DC converter may also be referred to as second DC module output terminals outputting the second DC module voltage.

The first battery module 10 and the second battery module 20, described above, may further include a common capacitor (not illustrated separately) between the battery 110 and an inverter 120.

Furthermore, according to an exemplary embodiment of the present disclosure, since various magnitudes and types of system voltages may be output depending on the series or in parallel combination of the first battery module 10 and the second battery module 20, it is possible to apply the battery module (10 or 20) of a single standard to various vehicle models and reduce the manufacturing costs.

For example, when a voltage of the battery 110 is 100 V, a battery system outputting a voltage of 400 V may be disposed by connecting four second battery modules 20 in series, and a battery system outputting a voltage of 800 V may be disposed by combining eight second battery modules 20 in series. Furthermore, for example, when a voltage of the battery 110 may be 50 V, a battery system outputting a voltage of 400 V may be disposed by connecting eight second battery modules 20 in series, and a battery system outputting a voltage of 800 V may be disposed by connecting 16 second battery modules 20 in series.

Furthermore, a single-phase battery system may be configured by connecting inverters of the plurality of first battery modules 10 to second battery modules 20 in series and outputting a high-voltage AC voltage using the inverters output, and a three-phase AC voltage may be output using a plurality of single-phase battery systems. Furthermore, the first battery module 10 to the second battery module 20 may be combined in parallel to form a battery system through which a large amount of current flows.

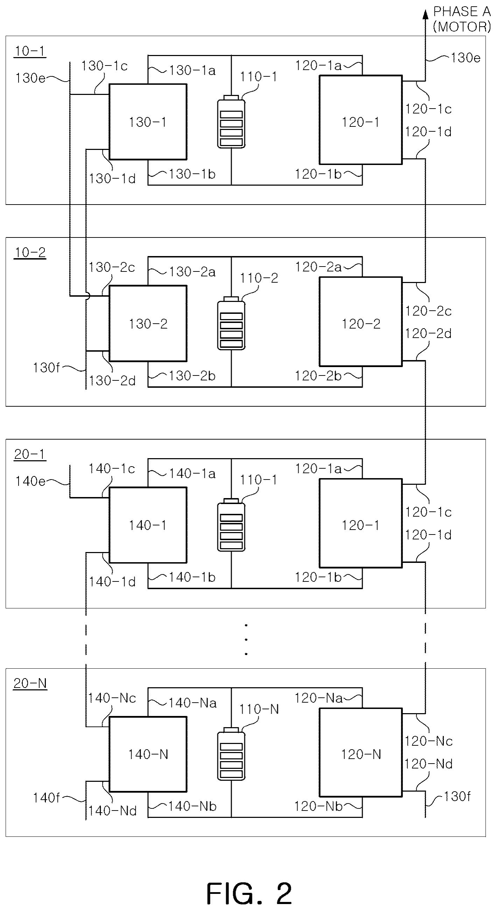

FIG. 2 is a view exemplarily illustrating a single-phase battery module system including a plurality of battery modules according to an exemplary embodiment of the present disclosure. Although FIG. 2 illustrates two first battery modules 10-1 and 10-2 and N second battery modules 20-1,..., and 20-N, it should be noted that the number of first battery modules and the number of second battery modules are not limited thereto. For example, the first battery module may of course be one.

Referring to FIG. 2, a single-phase battery system according to an exemplary embodiment of the present disclosure may include a plurality of battery modules 10-1, 10-2, 20-1,..., and 20-N, and the plurality of battery modules 10-1, 10-2, 20-1,..., and 20-N may be configured as a combination of a first battery module (10-1 and 10-2) and a second battery module (20-1,..., and 20-N). Furthermore, each of the plurality of battery modules 10-1, 10-2, 20-1,..., and 20-N included in the single-phase battery system may be identical to the battery modules 10 and 20 illustrated in FIG. 1A and FIG. 1C.

The plurality of battery modules 10-1, 10-2, 20-1,.., and 20-N included in the single-phase battery system may have the following connection structure.

Specifically, output terminals 130-1c and 130-1d of a first DC/DC converter 130-1 included in the first battery module 10-1, and output terminals 130-2c and 130-2d of a first DC/DC converter 130-2 included in the first battery module 10-2 may be connected in parallel, to output a first DC system voltage to a low-voltage load through first DC system output terminals 130e and 130f.

Output terminals 140-1c, 140-1d,.., 140-Nc, and 140-Nd of second DC/DC converters 140-1,.., and 140-N included in the second battery module (20-1,.., and 20-N) may be connected in series to output an integer multiple (N times) of a second DC module voltage as a high-voltage load through second DC system output terminals 140e and 140f. For example, when the second DC module voltage is set to 100 V, N second DC/DC converters 140-1,..., and 140-N connected in series may output 100*NV.

Output terminals 120-1c, 120-1d, 120-2c, 120-2d, 120-1c, 120-1d, 120-Nc, and 120-Nd of each of inverters 120-1, 120-2, 120-1,.., and 120-N included in the plurality of battery modules 10-1, 10-2, 20-1,.., and 20-N may be connected to each other in series to output an integer multiple (N+2 times) of an AC module voltage through AC system output terminals 130e and 130f. For example, when the AC module voltage is set to 100 V, an AC voltage of (N+2)*100 V may be output. For example, a magnitude of the AC voltage may mean a maximum value, an effective value, or an average value of the AC voltage.

In summary, the first DC/DC converters 130-1 and 130-2 of the first battery module (10-1 and 10-2) may be connected in parallel, the second DC/DC converters 140-1,..., and 140-N of the second battery module (20-1,..., and 20-N) may be connected in parallel, and the inverters 120-1, 120-1, 120-1,..., and 120-N of the plurality of battery modules 10-1, 10-2, 20-1,..., and 20-N may be connected in series.

Furthermore, a single-phase battery system according to an exemplary embodiment of the present disclosure may include first DC system output terminals 130e and 130f configured by connecting first DC module output terminals 130-1c, 130-1d, 130-2c, and 130-2d included in each of a plurality of first battery modules (10-1 and 10-2) in parallel. For example, the first DC system output terminals 130e and 130f may output a first DC system voltage, and the first DC system voltage may have the same magnitude as a first DC module voltage output from the output terminals of the first DC/DC converters 130-1 and 130-2.

Furthermore, a single-phase battery system according to an exemplary embodiment of the present disclosure may include second DC system output terminals 140e and 140f configured by connecting second DC module output terminals 140-1c, 140-1d, 140-Nc,..., and 140-Nd included in each of a plurality of second battery modules (20-1,..., and 20-N) in series. For example, the second DC system output terminal 140e and 140f may output a second DC system voltage, and the second DC system voltage may have a magnitude, which may be an integer multiple (N times) of a second DC module voltage output from each of the output terminals of the second DC/DC converter 140-1,..., and 140-N.

Furthermore, a single-phase battery system 100 according to an exemplary embodiment of the present disclosure may include an AC system output terminals 120e and 120f configured by connecting AC module output terminals 120-1c, 120-1d, 120-2c, 120-2d, 120-1c, 120-1d, 120-Nc, and 120-Nd included in each of the plurality of battery modules 10-1, 10-2, 20-1,.., and 20-N in series. Furthermore, the AC system output terminals 120e and 120f may output an AC system voltage, and the AC system voltage may have a magnitude that may be an integer (N+2) times the AC module voltage output from the output terminals of the inverter. The AC system output terminals may provide AC power to an AC load, and may provide an input voltage for one phase of a three-phase AC voltage.

In summary, the single-phase battery system 100 may provide various output voltages including the first DC system voltage, the second DC system voltage, and the AC system voltage by connecting each element of the plurality of battery modules in series or in parallel.

Furthermore, the electric vehicle may include a low-voltage load R1 operating at a low voltage, a high-voltage load R2 operating at a high voltage, and an AC load such as a motor M or the like operating at a high-voltage three-phase AC voltage. In addition, the low-voltage load may use the first DC system voltage as a driving voltage, the high-voltage load may use the second DC system voltage as a driving voltage, and the AC load may use the AC system voltage as a driving voltage.

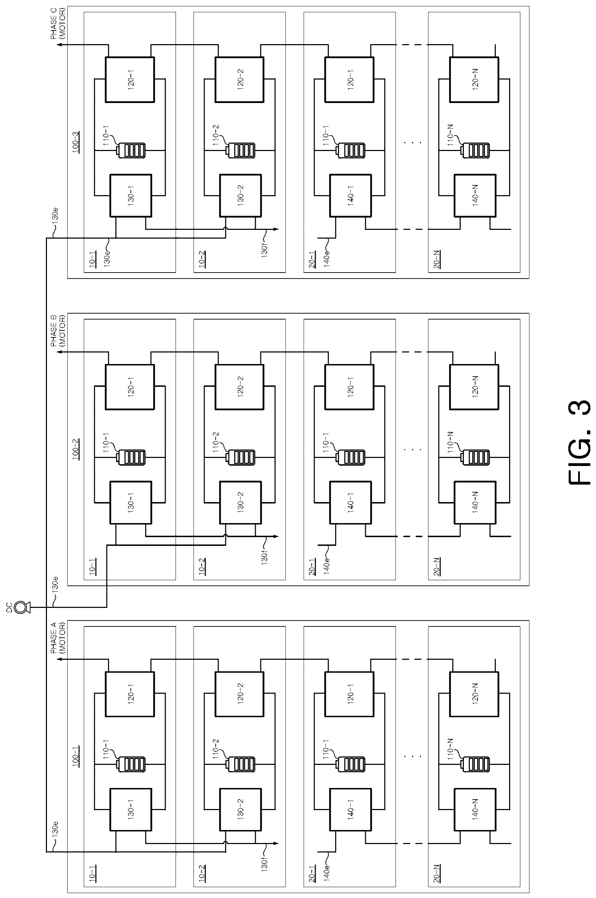

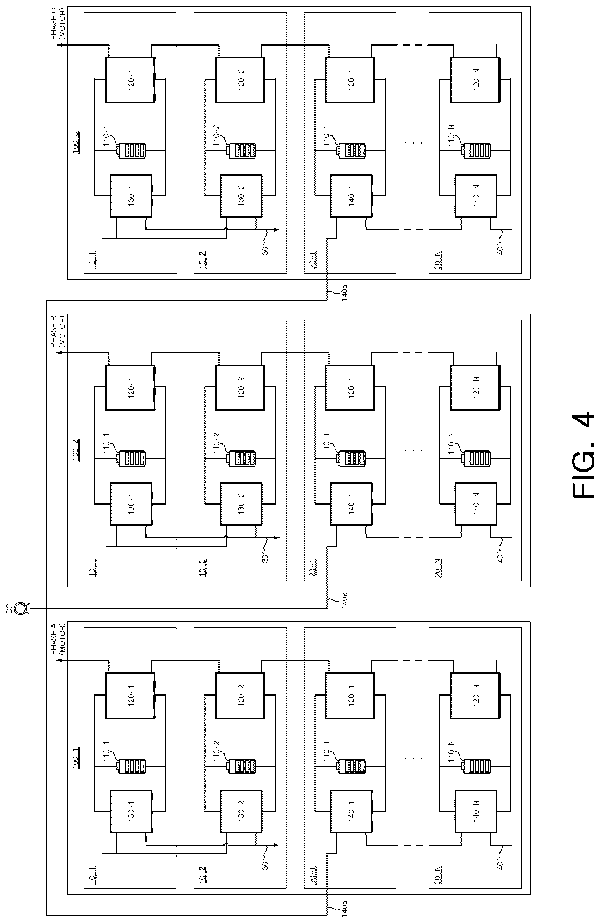

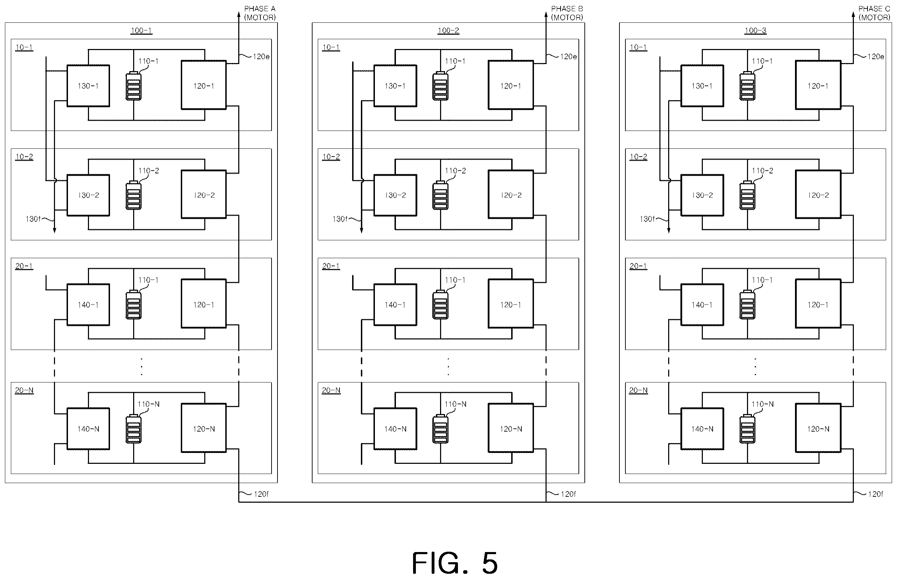

FIG. 3 is a view exemplarily illustrating a connection relationship of a first DC/DC converter in a three-phase battery system according to an exemplary embodiment of the present disclosure. Furthermore, FIG. 4 is a view exemplarily illustrating a connection relationship of a second DC/DC converter in a three-phase battery system according to an exemplary embodiment of the present disclosure. Furthermore, FIG. 5 is a view exemplarily illustrating a connection relationship of an inverter in a three-phase battery system according to an exemplary embodiment of the present disclosure.

Referring to FIG. 3, FIG. 4, and FIG. 5, a three-phase battery system according to an exemplary embodiment of the present disclosure may include three single-phase battery systems 100-1, 100-2, and 100-3, and each of the single-phase battery systems 100-1, 100-2, and 100-3 may include a plurality of battery modules.

Referring to FIG. 3, each of the three-phase battery systems 100-1, 100-2, and 100-3 according to an exemplary embodiment of the present disclosure may include first DC system output terminals 130e and 130f in which a plurality of first DC/DC converters 130-1 and 130-2 are connected to each other in parallel to output a first DC system voltage. Furthermore, the first DC system output terminals 130e and 130f included in each of the three single-phase battery systems 100-1, 100-2, and 100-3 may be connected to each other in parallel to output a first DC module voltage or a first DC system voltage having the same magnitude as the first DC module voltage.

Furthermore, referring to FIG. 4, each of the three-phase battery systems 100-1, 100-2, and 100-3 according to an exemplary embodiment of the present disclosure may include second DC system output terminals 140e and 140f in which a plurality of second DC/DC converters 140-1,.., and 140-N are connected to each other in series to output a second DC system voltage. Furthermore, the second DC system output terminals 140e and 140f included in each of the three single-phase battery systems 100-1, 100-2, and 100-3 may be connected to each other in parallel to output a second DC system voltage that may be an integer multiple (N) of a magnitude of a second DC module voltage.

Also, referring to FIG. 5, each of the three-phase battery systems 100-1, 100-2, and 100-3 according to an exemplary embodiment of the present disclosure may include AC system output terminals 120e and 120f configured by connecting a plurality of inverters 120-1, 120-2, 120-1,.., and 120-N to each other in series. Also, the AC system output terminals 120e and 120f included in each of the three single-phase battery systems 100-1, 100-2, and 100-3 may output different AC voltages having the same magnitude and the same phase difference.

For example, each of the AC system output terminals included in the three single-phase battery systems may output different AC voltages having a phase difference of 120 degrees from each other. Therefore, the three-phase battery system may output a three-phase AC voltage, and may provide a driving voltage to an AC load (e.g., a motor) using the three-phase AC voltage as the driving voltage.

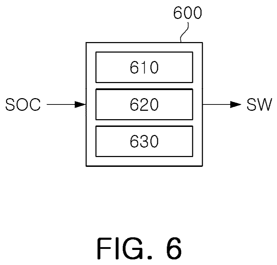

FIG. 6 is a view exemplarily illustrating a controller according to an exemplary embodiment of the present disclosure. A controller 600 may include an input unit 610, a processor 620, and a storage unit 630. The controller 600 may perform balancing control between a plurality of battery modules for each of a plurality of single-phase systems.

Specifically, the input unit 610 may receive in real time a state-of-charge (SOC) of a battery disposed in each of the plurality of battery modules for each of the plurality of single-phase battery systems, and transmit the state-of-charge (SOC) to the processor 620. The state-of-charge (SOC) of the battery may be input from a battery management system (BMS), not illustrated. Hereinafter, although balancing control is illustrated as being performed based on the state-of-charge (SOC) of the battery, but it is of course possible to use a voltage of the battery instead of the state-of-charge.

The processor 620 may monitor the state-of-charge of the battery disposed in each of the plurality of battery modules in real time for each of the plurality of single-phase battery systems, based on the state-of-charge (SOC) of the battery input through the input unit 610.

Thereafter, the processor 620 may set a turn-on sequence of the inverter included in each of the plurality of battery modules, based on the state-of-charge of the battery disposed in each of the plurality of battery modules, monitored in real time.

Finally, the processor 620 may output an AC system voltage in a sine wave form by sequentially turning on or off the inverter included in each of the plurality of battery modules according to the set turn-on sequence.

Specifically, the processor 620 may complementarily control switches disposed in an H-bridge single-phase inverter for every T/2 cycle of the AC system voltage, may sequentially turn on the inverters respectively disposed in the plurality of battery modules according to the turn-on sequence during a T/4 cycle, and may sequentially turn off the inverters respectively disposed in the plurality of battery modules in a sequence, opposite to the turn-on sequence, during the next T/4 cycle.

Furthermore, the processor 620 may update the turn-on sequence of the inverters respectively disposed in the plurality of battery modules for every integer multiple of one cycle of the AC system voltage. Since an amount of computation increases when the turn-on sequence is updated every cycle, this may be to reduce a load according to the amount of computation.

Furthermore, the processor 620 may bypass a battery disposed in at least one of the plurality of battery modules by turning off one of two upper switches or two lower switches of the H-bridge single-phase inverter.

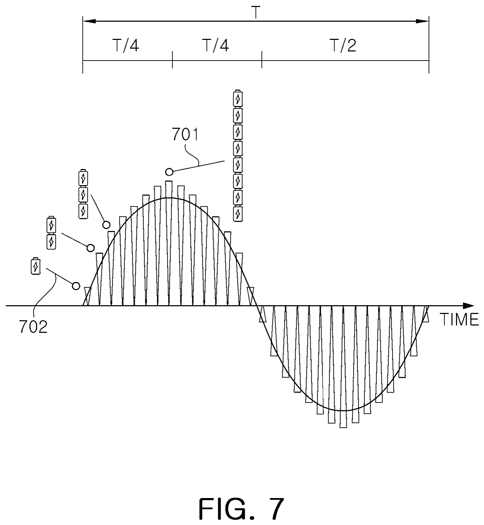

FIG. 7 is a view exemplarily illustrating balancing control according to an exemplary embodiment of the present disclosure. For the purpose of understanding, it is assumed that a single-phase battery system may include seven battery modules, seven inverters, such as first to seventh inverters, and seven batteries, such as first to seventh batteries.

A processor 620 may set a turn-on sequence of inverters respectively included in a plurality of battery modules so that the turn-on sequence becomes faster as a state-of-charge (SOC) of a battery disposed in each of the plurality of battery modules becomes higher. For example, it is assumed that the state-of-charge is higher in a sequence of first to seventh inverters. For example, the turn-on sequence may be set as a first battery - a second battery - a third battery - a fourth battery - a fifth battery - a sixth battery - a seventh battery.

Thereafter, the processor 620 may complementarily control switches disposed in an H-bridge single-phase inverter for every T/2 cycle of an AC system voltage. The complementary control means that when a pair of switches A+ and B- are turned on, a pair of switches A- and B+ may be turned off, and when the pair of switches A- and B+ are turned on, the pair of switches A+ and B- may be turned off, as illustrated in FIG. 1B.

The processor 620 may sequentially turn on the first inverter, the second inverter, the third inverter, the fourth inverter, the fifth inverter, the sixth inverter, and the seventh inverter, according to a switch signal SW during a T/4 cycle of the AC system voltage. Figure symbol 701 represents an AC system voltage output from the single-phase battery system by the first inverter turned on first, and figure symbol 702 represents an AC system voltage output from the single-phase battery system when all of the first to seventh inverters are turned on.

Conversely, during remaining T/4 cycles of the AC system voltage, the seventh inverter, the sixth inverter, the fifth inverter, the fourth inverter, the third inverter, the second inverter, and the first inverter may be sequentially turned off according to the switch signal SW, thereby completing a first T/2 cycle of the AC system voltage. The same may be applied to a second T/2 cycle, except that the switches disposed in the H-bridge single-phase inverter are complementarily controlled.

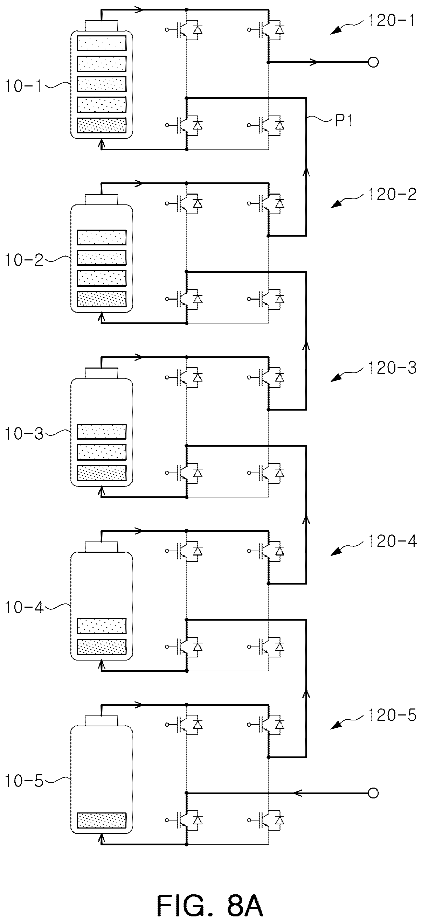

FIG. 8A is a view exemplarily illustrating a current path of a single-phase battery system when polarity of an AC system voltage is positive according to an exemplary embodiment of the present disclosure. Although FIG. 8A illustrates only five battery modules, the same explanation may be given for a case in which seven battery modules are applied.

As illustrated in FIGS. 7 and 8A, in a first T/2 cycle of an AC system voltage, it is assumed that polarity of the AC system voltage is positive, and therefore, a pair of switches A- and B+ of all inverters 102-1 may be turned on, a pair of switches A+ and B-may be turned off, and therefore, a current path may be formed along an illustrated path P1.

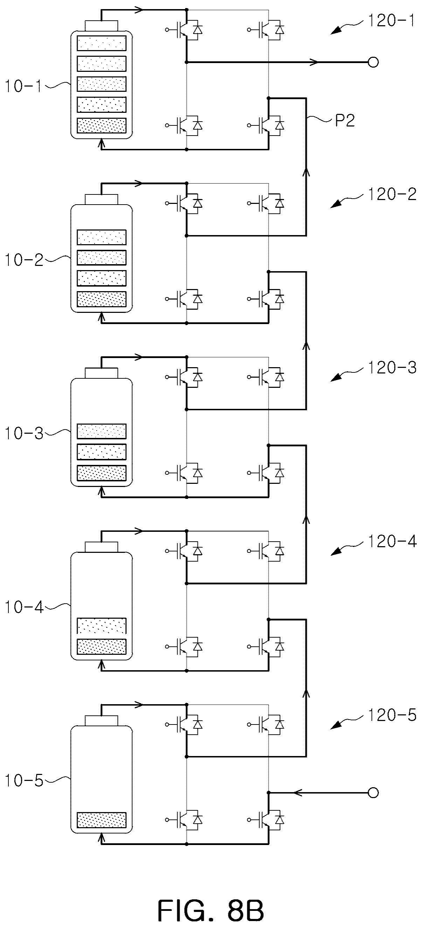

As illustrated in FIGS. 7 and 8B, in a second T/2 cycle of the AC system voltage, it is assumed that polarity of the AC system voltage is negative, and therefore, a pair of switches A- and B+ of all inverters 102-1 may be turned off, and a pair of switches A+ and B- may be turned on, and therefore, a current path may be formed along an illustrated path P2.

It should be noted that a state-of-charge between batteries in the above-described drawings 8A to 8B may be exaggerated.

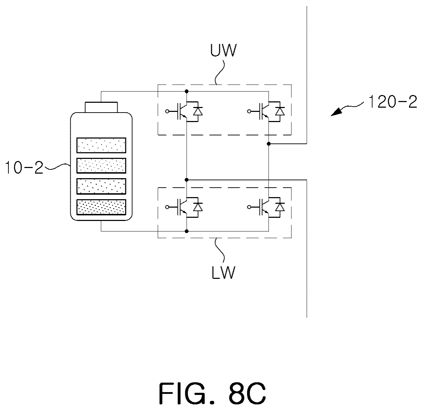

FIG. 8C is a view exemplarily illustrating control of an inverter switch when bypassing a battery disposed in at least one of a plurality of battery modules during balancing control according to an exemplary embodiment of the present disclosure.

A processor 620 may bypass a battery 10-2 included in at least one of a plurality of battery modules by turning off one of two upper switches UW or two lower switches LW of an H-bridge single-phase inverter.

For example, in FIG. 8A, when only a first inverter 120-1 should be turned on, remaining inverters 120-2 to 120-5 may bypass batteries 10-2 to 10-5 in the above manner.

Finally, a storage unit 630 may store programs for implementing various functions of the processor 620 described above, the turn-on sequence described above, or the like.

As described above, according to an exemplary embodiment of the present disclosure, a standardized battery module operating at a low voltage may be used to apply a power conversion element configured for operating at a low voltage, thereby reducing manufacturing costs.

Furthermore, according to an exemplary embodiment of the present disclosure, even though a required voltage or standard is different for each vehicle type, standardized battery modules may be combined in series or in parallel to meet various standards, and mass production is possible, so production costs may be reduced.

Furthermore, according to an exemplary embodiment of the present disclosure, a battery module system may be configured by connecting standardized battery modules in series or in parallel, space utilization efficiency may increase to reduce an overall volume, and when a failure occurs in some portions, each battery module may be replaced so that repairs are easy, and since balancing control may be performed for each battery module, overall energy efficiency may increase.

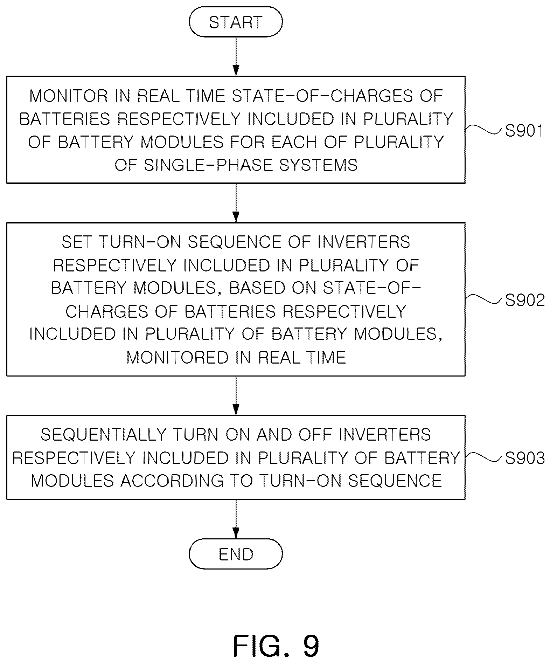

FIG. 9 is a flowchart illustrating a balancing control method of a vehicular battery system according to an exemplary embodiment of the present disclosure.

Hereinafter, with reference to FIG. 1, FIG. 2, FIG. 3, FIG. 4, FIG. 5, FIG. 6, FIG. 7, FIG. 8 and FIG. 9, a balancing control method of a vehicular battery system according to an exemplary embodiment of the present disclosure will be described. However, for the sake of simplicity, any descriptions overlapping FIG. 1, FIG. 2, FIG. 3, FIG. 4, FIG. 5, FIG. 6, FIG. 7, and FIG. 8C will be omitted. The balancing control method of a vehicular battery system may be initiated by operation of monitoring state-of-charges (SOC) of batteries respectively disposed in a plurality of battery modules for each of a plurality of single-phase systems (S901).

Thereafter, a controller 600 may set a turn-on sequence of inverters respectively disposed in the plurality of battery modules, based on the state-of-charges of the batteries respectively disposed in the plurality of battery modules, monitored in real time (S902).

For example, the controller 600 may set the turn-on sequence of inverters respectively disposed in the plurality of battery modules so that the turn-on sequence becomes faster as the state-of-charges of the batteries included in each of the plurality of battery modules become higher.

Finally, the controller 600 may output an AC system voltage in a sine wave form by sequentially turning on or off the inverters respectively disposed in the plurality of battery modules according to the set turn-on sequence (S903).

Specifically, the controller 600 may complementarily control switches disposed in an H-bridge single-phase inverter for every T/2 cycle of the AC system voltage, may sequentially turn on the inverters respectively disposed in the plurality of battery modules according to the turn-on sequence during a T/4 cycle, and may sequentially turn off the inverters respectively disposed in the plurality of battery modules in a sequence, opposite to the turn-on sequence, during the next T/4 cycle.

According to an exemplary embodiment of the present disclosure, the controller 600 may update the turn-on sequence of the inverters respectively disposed in the plurality of battery modules for every integer multiple of one cycle of the AC system voltage. Since an amount of computation increases when the turn-on sequence is updated every cycle, this may be to reduce a load according to the amount of computation.

According to an exemplary embodiment of the present disclosure, the controller 600 may bypass a battery disposed in at least one of the plurality of battery modules by turning off one of two upper switches or two lower switches of the H-bridge single-phase inverter.

As described above, according to an exemplary embodiment of the present disclosure, a standardized battery module operating at a low voltage may be used to apply a power conversion element configured for operating at a low voltage, thereby reducing manufacturing costs.

Furthermore, according to an exemplary embodiment of the present disclosure, even though a required voltage or standard is different for each vehicle type, standardized battery modules may be combined in series or in parallel to meet various standards, and mass production is possible, so production costs may be reduced.

Furthermore, according to an exemplary embodiment of the present disclosure, a battery module system may be configured by connecting standardized battery modules in series or in parallel, space utilization efficiency may increase to reduce an overall volume, and when a failure occurs in some portions, each battery module may be replaced so that repairs are easy, and since balancing control may be performed for each battery module, overall energy efficiency may increase.

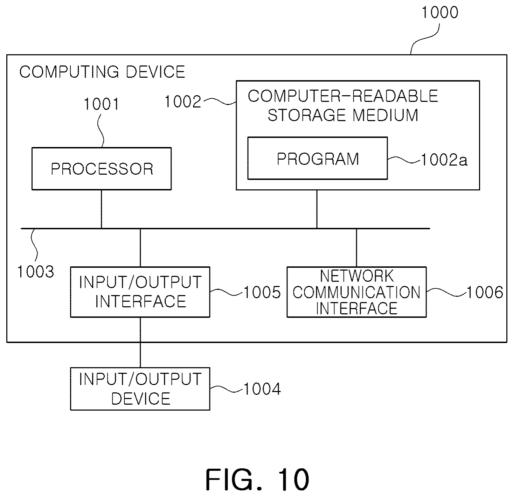

Finally, FIG. 10 is a block diagram of a computing device that may fully or partially implement a controller 600 according to an exemplary embodiment of the present disclosure.

As illustrated in FIG. 10, a computing device 1000 may include at least one processor 1001, at least one computer-readable storage medium 1002, and at least one communication bus 1003.

The processor 1001 may enable the computing device 1000 to operate according to the above-mentioned example embodiments. For example, the processor 1001 may execute one or more programs stored in the computer-readable storage medium 1002. The one or more programs may include one or more computer-executable instructions, which, when executed by the processor 1001, cause the computing device 1000 to perform operations according to example embodiments.

The computer-readable storage medium 1002 may be configured to store a computer-executable instruction or program code, program data, and/or information having other suitable form. A program 1002a stored in the computer-readable storage medium 1002 may include a set of instructions executable by the processor 1001. In an exemplary embodiment of the present disclosure, the computer-readable storage medium 1002 may include a memory (a volatile memory, such as a random access memory, a nonvolatile memory, or an appropriate combination thereof), at least one magnetic disk storage device, at least one optical disk storage device, at least one flash memory device, a storage medium accessible by the computing device 1000 and storing desired information, or a suitable combination thereof.

The communication bus 1003 may be interconnected to various components of the computing device 1000 such as the processor 1001 and the computer-readable storage medium 1002.

The computing device 1000 may also include at least one input/output interface 1005 and at least one network communication interface 1006, providing an interface for at least one input/output device 1004. The input/output interface 1005 and the network communication interface 1006 may be connected to the communication bus 1003. The network may be any one of a cellular network, such as global system for mobile communications (GSM), enhanced data rates for GSM evolution (EDGE), general packet radio service (GPRS), Code Division Multiple Access (CDMA), time division-CDMA (TD-CDMA), Universal Mobile Telecommunications System (UMTS), Long Term Evolution (LTE), or another cellular network.

The input/output device 1004 may be coupled to other components of the computing device 1000 through the input/output interface 1005. An example input/output device 1004 may include, but is not limited to, an input device such as a pointing device (such as a mouse, a trackpad, or the like), a keyboard, a touch input device (such as a touchpad, a touch screen, or the like), a voice or sound input device, various types of sensor devices, and/or various types of imaging devices, and/or an output device such as a display device, a printer, a speaker, and/or a network card. The example input/output device 1004 may be included in the computing device 1000 as a component forming the computing device 1000, or may be connected to the computing device 1000 as a separate device distinct from the computing device 1000.

An exemplary embodiment of the present disclosure may include a program for performing methods described in the present specification on a computer, and a computer-readable recording medium containing the program. The computer-readable recording medium may include a program instruction, a local data file, a local data structure, or the like, singly or in combination. The medium may be those specifically designed and constructed for the present disclosure, or may be those commonly available in a computer software field. Examples of computer-readable recording medium may include a magnetic medium such as a hard disk, a floppy disk, or a magnetic tape, an optical recording medium such as a CD-ROM or a DVD, and a hardware device specifically configured to store and perform a program instruction such as a ROM, a RAM, a flash memory, or the like. Examples of the program may include not only a machine language code such as that generated by a compiler, but also a high-level language code that may be executed by a computer using an interpreter or the like.

According to an exemplary embodiment of the present disclosure, a standardized battery module operating at a low voltage may be used to apply a power conversion element configured for operating at a low voltage, thereby reducing manufacturing costs.

In addition, according to an exemplary embodiment of the present disclosure, even though a voltage or a specification required for each vehicle type is different, standardized battery modules may be combined in series or in parallel to meet various specifications, and since mass production is possible, production costs may be reduced.

In addition, according to an exemplary embodiment of the present disclosure, standardized battery modules may be connected in series or in parallel to configure a battery module system, to increase space utilization efficiency, thereby reducing an overall volume, when a failure occurs in some portions, each battery module may be replaced so that repairs are easy, and since balancing control may be performed for each battery module, overall energy efficiency may increase.

While example embodiments have been illustrated and described above, it will be apparent to those skilled in the art that modifications and variations could be made without departing from the scope of the present disclosure as defined by the appended claims.

## Claims

1. A vehicular battery system comprising:
a plurality of single-phase battery systems,
wherein each of the plurality of single-phase battery systems includes a plurality of battery modules,
wherein the plurality of battery modules include a combination of a first battery module and a second battery module,
wherein each of the first battery module and the second battery module includes a battery, an inverter including AC module output terminals outputting an AC module voltage from a voltage of the battery, and a DC/DC converter including DC module output terminals outputting a DC module voltage from a voltage of the battery,
wherein the DC/DC converter disposed in the first battery module includes a step-down converter including first DC module output terminals, stepping down a voltage of the battery to a first DC module voltage and outputting the first DC module voltage, and
wherein the DC/DC converter disposed in the second battery module includes a step-up converter including second DC module output terminals, stepping up a voltage of the battery to a second DC module voltage and outputting the second DC module voltage.

2. The vehicular battery system of claim 1, wherein the second DC module output terminals disposed respectively in the plurality of second battery modules are connected to each other in series, and output a second DC system voltage through the second DC system output terminals.

3. The vehicular battery system of claim 2, wherein the second DC system output terminals respectively disposed in the plurality of single-phase battery systems are connected to each other in parallel and output an integer multiple of the second DC module voltage, and are configured to be connected to a second load using an integer multiple of the second DC module voltage as a driving voltage.

4. The vehicular battery system of claim 1, 2 or 3, wherein the AC module output terminals disposed respectively in the plurality of battery modules are connected to each other in series, and output an AC system voltage through AC system output terminals.

5. The vehicular battery system of claim 4, wherein the AC system output terminals respectively disposed in the plurality of single-phase battery systems include the same phase difference, and output an integer multiple of the AC module voltage, and are configured to be connected to an AC load having an integer multiple of the AC module voltage as a driving voltage.

6. The vehicular battery system of one of claims 1 to 5, wherein, based on that the first battery module is disposed in singular, the first DC module output terminals are first DC system output terminals, and
based on that the first battery module is disposed in two or more, the first DC module output terminals disposed respectively in the plurality of first battery modules are connected to each other in parallel to output a first DC system voltage through the first DC system output terminals.

7. The vehicular battery system of claim 6, wherein the first DC system output terminals respectively disposed in the plurality of single-phase battery systems are connected to each other in parallel to output the first DC module voltage, and are configured to be connected to a first load using the first DC module voltage as a driving voltage.

8. The vehicular battery system of one of claims 1 to 7, further including a controller performing balancing control between the plurality of battery modules, for each of the plurality of single-phase battery systems.

9. The vehicular battery system of claim 8, wherein the controller:
monitors in real time state-of-charges (SOC) of batteries respectively disposed in the plurality of battery modules for each of the plurality of single-phase battery systems,
sets a turn-on sequence of inverters respectively disposed in the plurality of battery modules, based on the state-of-charges of the batteries respectively disposed in the plurality of battery modules, monitored in real time, and
sequentially turns on or off inverters respectively disposed in the plurality of battery modules according to the set turn-on sequence, to output the AC system voltage in a sine wave form.

10. The vehicular battery system of claim 9, wherein the controller sets the turn-on sequence of the inverters respectively disposed in the plurality of battery modules so that the higher the state-of-charge of a battery disposed in each of the plurality of battery modules, the earlier the turn-on sequence.

11. The vehicular battery system of claim 9 or 10,
wherein the inverters include an H-bridge single-phase inverter, and
wherein the controller complementarily controls switches disposed in the H-bridge single-phase inverter for every T/2 cycle of the AC system voltage, sequentially turns on the inverters respectively disposed in the plurality of battery modules according to the turn-on sequence during a T/4 cycle, and sequentially turns off the inverters respectively disposed in the plurality of battery modules in a sequence, opposite to the turn-on sequence, during the next T/4 cycle.

12. The vehicular battery system of one of claims 8 to 11, wherein the controller updates a turn-on sequence of inverters respectively disposed in the plurality of battery modules for every integer multiple of one cycle of the AC system voltage.

13. The vehicular battery system of one of claims 8 to 12,
wherein the inverters include an H-bridge single-phase inverter, and
wherein the controller turns off one of two upper switches or two lower switches of the H-bridge single-phase inverter so that a battery disposed in at least one of the plurality of battery modules is bypassed.

14. A vehicular battery system comprising:
a single-phase battery system,
wherein the single-phase battery system includes a plurality of battery modules,
wherein the plurality of battery modules include a combination of a first battery module and a second battery module,
wherein each of the first battery module and the second battery module includes a battery, an inverter including AC module output terminals outputting an AC module voltage from a voltage of the battery, and a DC/DC converter including DC module output terminals outputting a DC module voltage from a voltage of the battery,
wherein the DC/DC converter disposed in the first battery module includes a step-down converter including first DC module output terminals stepping down a voltage of the battery to a first DC module voltage and outputting the first DC module voltage, and
wherein the DC/DC converter disposed in the second battery module includes a step-up converter including second DC module output terminals stepping up a voltage of the battery to a second DC module voltage and outputting the second DC module voltage.

15. A balancing control method performed by a computing device including one or more processors and a memory storing programs executed by the one or more processors, the method comprising:
monitoring in real time state-of-charges (SOC) of batteries respectively disposed in a plurality of battery modules for each of a plurality of single-phase battery systems,
setting a turn-on sequence of inverters respectively disposed in the plurality of battery modules, based on the state-of-charges of the batteries respectively disposed in the plurality of battery modules, monitored in real time, and
sequentially turning on or off the inverters respectively disposed in the plurality of battery modules according to the set turn-on sequence, to output an AC system voltage in a sine wave form.

## Amended claims

### Amended claims in accordance with Rule 137(2) EPC.

1. A vehicular battery system comprising:
a plurality of single-phase battery systems, and
a controller (600),
wherein each of the plurality of single-phase battery systems comprise a plurality of battery modules,
wherein the plurality of battery modules comprise a combination of a first battery module (10) and a second battery module (20),
wherein each of the first battery module (10) and the second battery module (20) includes a battery (110), an inverter including AC module output terminals (120c, 120d) configured to output an AC module voltage based on a voltage of the battery (110), and a DC/DC converter (130, 140) including DC module output terminals (130c, 130d; 140c, 140d) configured to convert the voltage of the battery (110),
wherein the DC/DC converter (130) of the first battery module (10) comprises a step-down converter,
wherein the DC module output terminals (130c, 130d) of step-down converters of a plurality of the first battery modules (10) are connected in parallel to generate a first DC system voltage,
wherein the DC/DC converter (140) of the second battery module (20) comprises a step-up converter,
wherein the DC module output terminals (140c, 140d) of step-up converters of a plurality of the second battery modules (20) are connected in series to generate a second DC system voltage,
wherein the AC module output terminals (120c, 120d) of inverters of the plurality of battery modules are connected in series to generate an AC system voltage,
**characterized in that** the controller (600):
monitors in real time state-of-charges (SOC) of batteries (110) respectively disposed in the plurality of battery modules (10, 20) for each of the plurality of single-phase battery systems,
sets a turn-on sequence of inverters respectively disposed in the plurality of battery modules (10, 20), based on the state-of-charges of the batteries (110) respectively disposed in the plurality of battery modules (10, 20) monitored in real time, and
sequentially turns on or off inverters respectively disposed in the plurality of battery modules (10, 20) according to the set turn-on sequence, to output the AC system voltage in a sine wave form.

2. The vehicular battery system of claim 1, wherein the second DC module output terminals (140c, 140d) disposed respectively in the plurality of second battery modules (20) are connected to each other in series, and output a second DC system voltage through the second DC system output terminals.

3. The vehicular battery system of claim 2, wherein the second DC system output terminals respectively disposed in the plurality of single-phase battery systems are connected to each other in parallel and output an integer multiple of the second DC module voltage, and are configured to be connected to a second load using an integer multiple of the second DC module voltage as a driving voltage.

4. The vehicular battery system of claim 1, 2 or 3, wherein the AC module output terminals (120c, 120d) disposed respectively in the plurality of battery modules are connected to each other in series, and output an AC system voltage through AC system output terminals.

5. The vehicular battery system of claim 4, wherein the AC system output terminals respectively disposed in the plurality of single-phase battery systems include the same phase difference, and output an integer multiple of the AC module voltage, and are configured to be connected to an AC load having an integer multiple of the AC module voltage as a driving voltage.

6. The vehicular battery system of one of claims 1 to 5, wherein, based on that the first battery module (10) is disposed in singular, the first DC module output terminals (130c, 130d) are first DC system output terminals, and
based on that the first battery module (10) is disposed in two or more, the first DC module output terminals (130c, 130d) disposed respectively in the plurality of first battery modules (10) are connected to each other in parallel to output a first DC system voltage through the first DC system output terminals.

7. The vehicular battery system of claim 6, wherein the first DC system output terminals respectively disposed in the plurality of single-phase battery systems are connected to each other in parallel to output the first DC module voltage, and are configured to be connected to a first load using the first DC module voltage as a driving voltage.

8. The vehicular battery system of claim 1, wherein the controller (600) sets the turn-on sequence of the inverters respectively disposed in the plurality of battery modules so that the higher the state-of-charge of a battery disposed in each of the plurality of battery modules, the earlier the turn-on sequence.

9. The vehicular battery system of claim 1,
wherein the inverters include an H-bridge single-phase inverter, and
wherein the controller (600) complementarily controls switches disposed in the H-bridge single-phase inverter for every T/2 cycle of the AC system voltage, sequentially turns on the inverters respectively disposed in the plurality of battery modules according to the turn-on sequence during a T/4 cycle, and sequentially turns off the inverters respectively disposed in the plurality of battery modules in a sequence, opposite to the turn-on sequence, during the next T/4 cycle.

10. The vehicular battery system of one of claims 1, wherein the controller (600) updates a turn-on sequence of inverters respectively disposed in the plurality of battery modules for every integer multiple of one cycle of the AC system voltage.

11. The vehicular battery system of one of claims 1,
wherein the inverters include an H-bridge single-phase inverter, and
wherein the controller (600) turns off one of two upper switches or two lower switches of the H-bridge single-phase inverter so that a battery disposed in at least one of the plurality of battery modules is bypassed.

12. A balancing control method performed in the vehicular battery system, the vehicular battery system comprising:
a plurality of single-phase battery systems, and
a controller (600),
wherein each of the plurality of single-phase battery systems comprise a plurality of battery modules,
wherein the plurality of battery modules comprises a combination of a first battery module (10) and a second battery module (20),
wherein each of the first battery module (10) and the second battery module (20) includes a battery, an inverter including AC module output terminals (120c, 120d) configured to output an AC module voltage based on a voltage of the battery (110), and a DC/DC converter (130, 140) including DC module output terminals (130c, 130d; 140c, 140d) configured to convert the voltage of the battery (110),
wherein the DC/DC converter (130) of the first battery module (10) comprises a step-down converter,
wherein the DC module output terminals (130c, 130d) of step-down converters of a plurality of the first battery modules (10) are connected in parallel to generate a first DC system voltage,
wherein the DC/DC converter (140) of the second battery module (20) comprises a step-up converter,
wherein the DC module output terminals (140c, 140d) of step-up converters of a plurality of the second battery modules (20) are connected in series to generate a second DC system voltage,
wherein the AC module output terminals (120c, 120d) of inverters of the plurality of battery modules are connected in series to generate an AC system voltage, the method comprising:
monitoring in real time state-of-charges (SOC) of batteries respectively disposed in a plurality of battery modules for each of a plurality of single-phase battery systems,
setting a turn-on sequence of inverters respectively disposed in the plurality of battery modules, based on the state-of-charges of the batteries respectively disposed in the plurality of battery modules, monitored in real time, and
sequentially turning on or off the inverters respectively disposed in the plurality of battery modules according to the set turn-on sequence, to output an AC system voltage in a sine wave form.
